# EUROPEAN PATENT APPLICATION

(11) **EP 2 913 861 A1**
(43) Date of publication of application: **02.09.2015**
(21) Application number: 14198257.9
(22) Date of filing: 16.12.2014
(51) Int. Cl.: H01M 2/04, H01M 2/26, H01M 10/04, H01M 2/30

(54) **Cap assembly and secondary battery**

(30) Priority: 27.02.2014 KR 20140023697
(71) Applicant: Samsung SDI Co., Ltd., Yongin-si, Gyeonggi-do (KR)
(72) Inventor: KANG, Shingun, Yongin-si Gyeonggi-do (KR)
(74) Representative: Walaski, Jan Filip

(57) **Abstract**

A cap assembly for a secondary battery is disclosed. In one aspect, the secondary battery includes an electrode assembly including a first electrode plate, a second electrode plate and a separator. The secondary battery also includes a case having an opening and housing the electrode assembly and a cap assembly. The cap assembly includes a cap plate sealing the opening of the case and having a first terminal hole and a terminal plate placed below the cap plate and having a second terminal hole. The terminal plate includes a lower surface facing away from the cap plate. The cap assembly also includes an electrode terminal inserted into the first and second terminal holes. A rotation preventing groove is formed in the lower surface of the terminal plate surrounding the second terminal hole and the rotation preventing groove makes contact with an end of the electrode terminal at one or more points.

## Description

The present invention relates to a cap assembly for a secondary battery and a secondary battery including the same.

Rechargeable, or secondary, batteries can be charged and discharged, in contrast to primary batteries, which cannot be recharged. Small secondary batteries are widely used in advanced electronic equipment, e.g., portable phones, and camcorders. Large secondary batteries are widely used for driving the motors of electric and hybrid cars. The standard secondary battery includes an electrode assembly housed within a case. An electrode terminal is connected through a collector plate and welded to the electrode assembly.

One inventive aspect is a secondary battery having a reduced resistance between an electrode terminal and a terminal plate and that can prevent the terminal plate from rotating due to an increased fixing force between the electrode terminal and the terminal plate.

Another aspect is a secondary battery including an electrode assembly including a first electrode plate, a second electrode plate and a separator, a case accommodating the electrode assembly and an electrolytic solution, and a cap assembly including a cap plate sealing a top opening of the case and including a first terminal hole, a terminal plate placed under the cap plate and including a second terminal hole, an electrode terminal inserted into the first and second terminal holes, and a gasket insulating the electrode terminal and surrounding an outer circumferential portion of the electrode terminal, wherein a rotation preventing groove is formed in a peripheral region of the second terminal hole on a first surface of the terminal plate to make contact with an end of the electrode terminal at one or more points.

A bottom surface of the rotation preventing groove and the first surface of the terminal plate may be stepped.

The rotation preventing groove may be formed to have a horizontal section shaped of a circle or a polygon.

The rotation preventing groove may be formed to have a horizontal section shaped of a polygon having at least three sides.

An inner diameter of the rotation preventing groove may be larger than an outer diameter of the end of the electrode terminal.

At least one stepped portion may be formed between the bottom surface of the rotation preventing groove and one surface of the terminal plate.

An area of the rotation preventing groove may be larger than an area of the end of the electrode terminal.

The rotation preventing groove may include one or more regions having a relatively small distance than a distance ranging from a central region of the second terminal hole to an inner wall of the second terminal hole.

The electrode terminal may include a head part fixed to a top portion of the cap plate, a body part extending from the head part to the terminal plate, and a mounting part extending from the body part to be mounted in the rotation preventing groove.

An inner diameter of the mounting part may be larger than an outer diameter of the body part.

The head part and the mounting part may have different sectional shapes.

Inner diameters of the first and second terminal holes may be larger than or equal to the inner diameter of the body part.

The cap assembly may further include an insulation plate interposed between the cap plate and the terminal plate, and a through hole through which the electrode terminal passes may be formed in the insulation plate.

Another aspect is a secondary battery, comprising an electrode assembly including a first electrode plate, a second electrode plate and a separator; a case having an opening and housing the electrode assembly and an electrolytic solution; and a cap assembly including: a cap plate sealing the opening of the case and having a first terminal hole; a terminal plate placed below the cap plate and having a second terminal hole, wherein the terminal plate includes a lower surface facing away from the cap plate; an electrode terminal inserted into the first and second terminal holes; and a gasket electrically insulating the electrode terminal from the cap plate, wherein a rotation preventing groove is formed in the lower surface of the terminal plate surrounding the second terminal hole, and wherein the rotation preventing groove makes contact with an end of the electrode terminal at one or more points.

The rotation preventing groove can include a bottom surface forming a step with the lower surface of the terminal plate. At least one additional step can be formed between the bottom surface of the rotation preventing groove and the lower surface of the terminal plate. The rotation preventing groove can have a substantially circular or substantially polygonal cross-sectional shape. The rotation preventing groove can have a substantially polygonal cross-sectional shape including at least three sides. The diameter of the rotation preventing groove can be greater than the diameter of the end of the electrode terminal. The area of the rotation preventing groove can be greater than the area of the end of the electrode terminal.

The distances from the center of the rotation preventing groove to the edges of the rotation preventing groove can vary. The electrode terminal can include a head fixed to the cap plate via the gasket; a body extending from the head toward the terminal plate; and a tail extending from the body and secured in the rotation preventing groove. The diameter of the tail can be greater than the diameter of the body. The head and the tail can have different cross-sectional shapes. The diameters of the first and second terminal holes can be greater than or substantially equal to the diameter of the body. The cap assembly can further include an insulation plate interposed between the cap plate and the terminal plate and the insulation plate can have a through hole through which the electrode terminal passes. The depth of the rotation preventing groove can be about 35% to about 55% of the thickness of the terminal plate.

Another aspect is a cap assembly for a secondary battery, the cap assembly comprising a cap plate having a first terminal hole; a terminal plate placed below the cap plate and having a second terminal hole, wherein the terminal plate includes a lower surface facing away from the cap plate; and an electrode terminal inserted into the first and second terminal holes, wherein the second terminal hole includes a rotation prevention groove formed along the lower surface of the terminal plate and having a larger diameter than the minimum diameter of the second terminal hole, and wherein the rotation prevention groove contacts the electrode terminal.

The rotation prevention groove can include a sidewall and the electrode terminal can contact the rotation prevention groove via the sidewall. The electrode terminal can protrude from the lower surface of the terminal plate. The rotation prevention groove can have a substantially polygonal cross-sectional shape. The diameter of the electrode terminal can be substantially the same as the minimum distance between the edges of the rotation prevention groove.

As described above, since the secondary battery according to at least one embodiment includes a rotation preventing groove in a terminal plate fastened to an electrode terminal to increase the contact area between the terminal plate and an end of the electrode terminal, rotation of the terminal plate can be prevented by improving the fixing force between the terminal plate and the electrode terminal and the resistance between the terminal plate and the electrode terminal can be reduced.

Additional aspects and/or advantages of the described technology will be set forth in part in the description which follows and, in part, will be obvious from the description, or may be learned by practice of the described technology.

Embodiments of the present invention will now be described, by way of example only, with reference to the accompanying drawings, in which:
FIG. 1 is an exploded perspective of a secondary battery according to an embodiment.
FIG. 2 is a vertical cross-sectional view illustrating a portion of the secondary battery shown in FIG. 1.
FIG. 3A illustrates the bottom surface of a terminal plate fastened with an insulation plate in a secondary battery according to an embodiment and FIG. 3B is a side view of the terminal plate shown in FIG. 3A.
FIG. 4A is a cross-sectional view taken along the line I - I ' of FIG. 2 and FIG. 4B illustrates the bottom surface of the terminal plate shown in FIG. 4A.
FIG. 5A illustrates the bottom surface of a terminal plate fastened with an insulation plate in a secondary battery according to another embodiment and FIG. 5B illustrates the bottom surface of the terminal plate after the electrode terminal is fastened with the terminal plate shown in FIG. 5A.
FIG. 6A illustrates the bottom surface of a terminal plate before an electrode plate is fastened with the terminal plate in a secondary battery according to still another embodiment and FIG. 6B illustrates the bottom surface of the terminal plate after the electrode terminal is fastened with the terminal plate shown in FIG. 6A;
FIG. 7A illustrates the bottom surface of a terminal plate before an electrode plate is fastened with the terminal plate in a secondary battery according to still another embodiment and FIG. 7B illustrates the bottom surface of the terminal plate after the electrode terminal is fastened with the terminal plate shown in FIG. 7A.
FIG. 8 illustrates the bottom surface of a terminal plate before an electrode plate is fastened with the terminal plate in a secondary battery according to still another embodiment.

Secondary batteries are manufactured to have various shapes such as cylindrical and prismatic shapes. The standard secondary battery is constructed as follows: an electrode assembly is formed by interposing an insulating separator between a positive electrode plate and a negative electrode plate, the electrode assembly is placed in a case together with an electrolyte, and a cap assembly including electrode terminals is attached to the case.

The cap assembly includes a cap plate and a terminal plate each having a terminal through hole and an electrode terminal inserted in the terminal through holes of the cap plate and the terminal plate. An outer periphery of the electrode terminal is wrapped by a gasket. A top portion of the electrode terminal is rotated and pressed by spinning equipment so as to be fitted into the terminal through holes and fastened to the terminal plate.

However, as the result of the spinning and pressing, the electrode terminal may be tapered so that the contact area between the electrode terminal and the terminal plate is reduced. This increases the resistance between the electrode terminal and the terminal plate, resulting in chronic failures of the manufactured secondary batteries.

In addition, as the contact area between the electrode terminal and the terminal plate decreases, the fastening force between the electrode terminal and the terminal plate may be weakened, loosening the electrode terminal such that it may freely rotate.

Hereinafter, examples of embodiments will be described in detail with reference to the accompanying drawings such that they can easily be made and used by those skilled in the art.

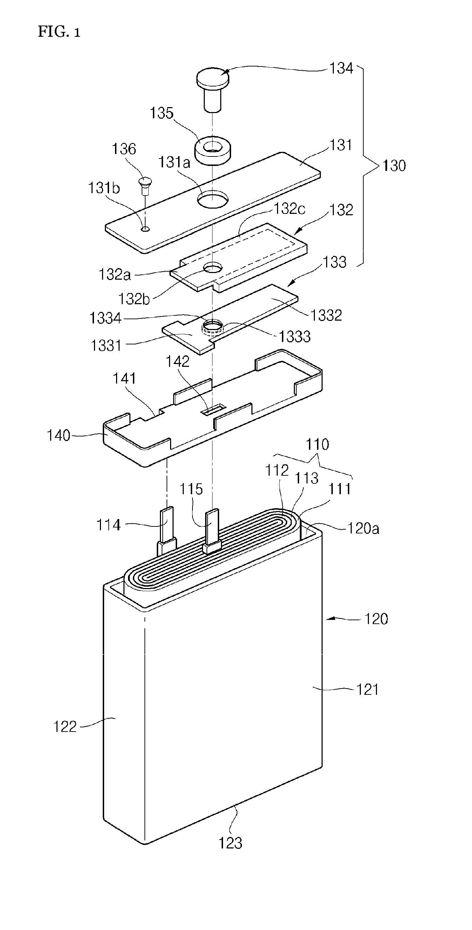

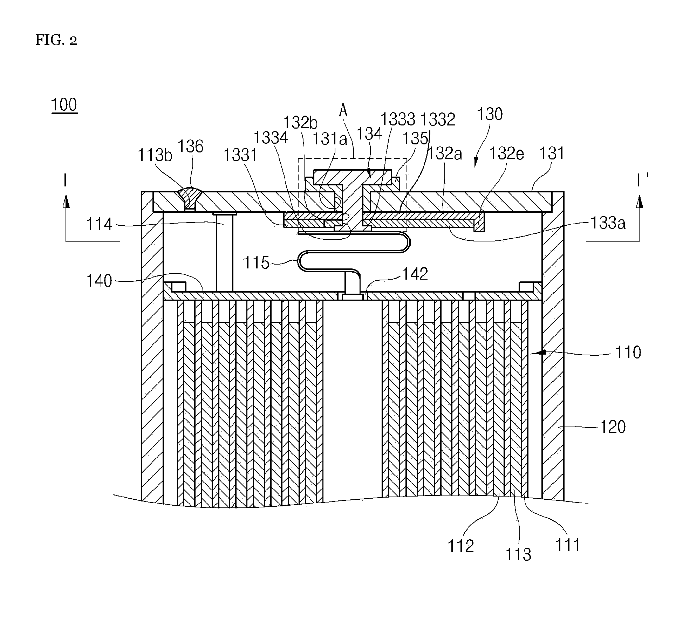

Referring to FIGS. 1 and 2, the secondary battery 100 includes an electrode assembly 110, a case 120, a cap assembly 130 and an insulation case 140.

The electrode assembly 110 includes a positive electrode plate 111, a negative electrode plate 112, and a separator 113 interposed between the positive and negative electrode plates 111 112. In addition, the electrode assembly 110 may be assembled such that the positive electrode plate 111, the negative electrode plate 112 and the separator 113 are wound roughly to have a jelly roll structure.

In more detail, the electrode assembly 110 includes the positive electrode plate 111 coated with a positive electrode active material, the negative electrode plate 112 coated with a negative electrode active material, and the separator 113 positioned between the positive electrode plate 111 and the negative electrode plate 112 to prevent an electric short therebetween while allowing lithium ions to move. Here, the positive electrode plate 111 may include an aluminum (Al) foil, the negative electrode plate 112 may include a copper (Cu) foil, and the separator 113 may include polyethylene (PE) or polypropylene (PP). However, the described technology is not limited thereto. In addition, a first electrode tab 114 protrudes upward by a predetermined length and is electrically connected to the positive electrode plate 111. A second electrode tab 115 also protrudes upward by a predetermined length and is electrically connected to the negative electrode plate 112. The first electrode tab 114 may be formed of aluminum (Al), and the second electrode tab 115 may be formed of nickel (Ni), but the described technology is not limited thereto.

The case 120 has a top opening 120a having an open top portion and has a substantially rectangular parallelepiped shape. That is to say, the case 120 has a pair of long side portions 121 spaced a predetermined distance apart from each other and having relatively large areas, a pair of short side portions 122 having smaller areas than the pair of long side portions 121, and a bottom portion 123 formed on a bottom of the long side portions 121 and the short side portions 122 to be perpendicular to the long side portions 121 and the short side portions 122.

The case 120 can be formed by a deep drawing method, so that the long side portions 121, the short side portions 122 and the bottom portion 123 are integrally formed. Here, the case 120 can be formed of one or more materials selected from the following: steel, aluminum and equivalents thereof, but is not limited thereto.

An electrolytic solution (not shown) and the electrode assembly 110 are accommodated or housed in the case 120. The electrolyte serves as a movement medium for lithium ions generated by electrochemical reactions occurring in the positive and negative electrode plates 111 and 112 during charging and discharging of the secondary battery 100. The electrolytic solution may be a non-aqueous organic electrolyte including a lithium salt and a high-purity organic solvent mixed therein. In addition, the electrolyte may be a polymer using a polymeric electrolyte.

The cap assembly 130 is connected to the case 120, thereby preventing the electrode assembly 110 and the electrolytic solution from being released into the environment.

The cap assembly 130 includes a cap plate 131, an insulation plate 132 and a terminal plate 133 connected to each other in that order.

The cap plate 131 is formed of a metal plate sized and shaped to correspond to the top opening 120a of the can 120. The cap plate 131 is, for example, formed of aluminum or an aluminum alloy. A first terminal hole 131a is centrally formed in the cap plate 131 and an electrolyte injection hole 131b for injecting an electrolytic solution is formed at one side of the cap plate 131. An electrode terminal 134 to be described later is inserted into the first terminal hole 131a. A tubular gasket 135 is interposed between the electrode terminal 134 and the cap plate 131 to electrically insulate the electrode terminal 134 and the cap plate 131 from each other. After the cap assembly 130 is attached to the top opening 120a of the case 120, the electrolytic solution is inserted into the case 120 through the electrolyte injection hole 131b. After the electrolytic solution is inserted into the case 120, the electrolyte injection hole 131b is sealed with a plug 136.

The insulation plate 132 is formed of the same insulating material as the gasket 135 and is attached to a bottom surface of the cap plate 131. The insulation plate 132 includes a bottom plate 132a having a through hole 132b located to correspond to the first terminal hole 131a of the cap plate 131 and a fixing part 132c extending downward from an edge of the bottom plate 132a. The electrode terminal 134 passing through the first terminal hole 131a is inserted into the through hole 132b when the insulation plate 132 and the cap plate 131 are attached to each other. The fixing part 132c extends to surround at least portions of opposite long sides and one short side of the terminal plate 133 so as to prevent the terminal plate 133 attached to the bottom surface of the insulation plate 132 from moving relative to the insulation plate 132. The shape of the insulation plate 132 may be varied according to the shape of the terminal plate 133.

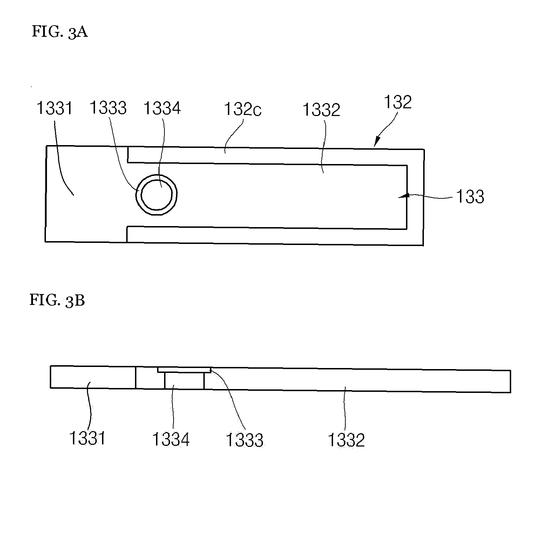

The terminal plate 133 can be formed of nickel (Ni) or a nickel alloy and is attached to the bottom surface of the insulation plate 132. Referring to FIGS. 3A and 3B, the terminal plate 133 includes a first part 1332 sized to correspond to the area of the bottom plate 132a and mounted on a bottom surface of the bottom plate 132a of the insulation plate 132. The terminal plate 133 further includes a second part 1331 extending from the first part 1332 and having a larger width than the first part 1332 such that the terminal plate 133 is substantially T-shaped. The second part 1331 disperses resistive heat that is generated by the flow of current which may be concentrated on the first part 1332.

The first part 1332 of the terminal plate 133 has a second terminal hole 1334 formed at a location corresponding to the through hole 132b of the insulation plate 132. Accordingly, the electrode terminal 134, passing through the cap plate 131, the insulation plate 132 and the terminal plate 133, is electrically connected to the negative electrode tab 115.

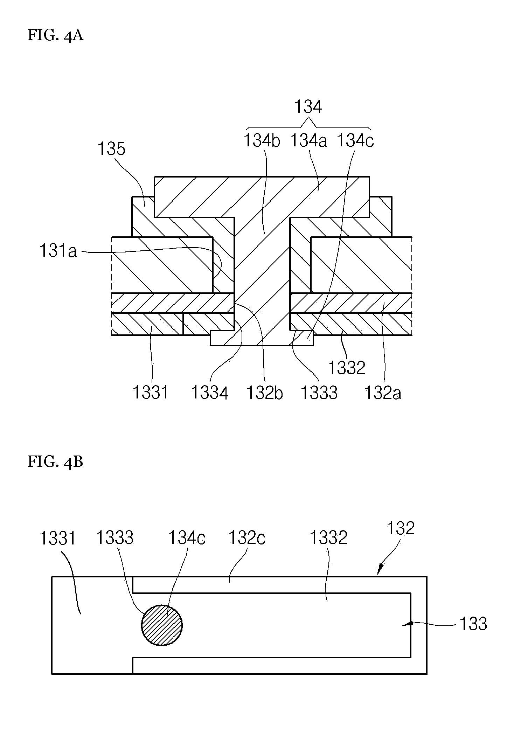

Referring to FIGS. 4A and 4B, a top portion of the electrode terminal 134 is rotated and pressed by spinning equipment (not shown) to then be fitted into the first terminal hole 131a, the through hole 132b and the second terminal hole 1334 to finally be attached to the terminal plate 133. As a result of the rotating and pressing, when the electrode terminal 134 is fitted into the first terminal hole 131a, the through hole 132b and the second terminal hole 1334, an end of the electrode terminal 134 is spread out, or expands, to substantially fill the rotation preventing groove 1333 and is attached the terminal plate 133. The end of the electrode terminal 134 may adopt the shape of the rotation preventing groove 1333 as a result of the rotating and pressing. In other words, the end of the electrode terminal 134 may contact the rotation preventing groove 1333 along all of its edges. Alternatively, the end of the electrode terminal 134 may expand to contact one or more of the edges of the rotation preventing groove 1333. In the embodiment of FIG. 4A, the terminal plate 132 is not rotated but is fixed by the electrode terminal 134 spreading out to the periphery of the rotation preventing groove 1333.

The rotation preventing groove 1333 is formed in the periphery (that is, the edge portion) of the second terminal hole 1334. That is to say, the rotation preventing groove 1333 is formed to fix the terminal plate 133 to the electrode terminal 134 so as not to rotate with respect to the bottom surface of the terminal plate 133. The rotation preventing groove 1333 is a groove having a predetermined depth surrounding the edge portion of the second terminal hole 1334. In addition, an inner diameter of the rotation preventing groove 1333 is larger than an outer diameter of the end of the electrode terminal 134. Therefore, the end of the electrode terminal 134 fitted into the rotation preventing groove 1333 is spread. In addition, the rotation preventing groove 1333 is formed such that its entire area is larger than the area of the end of the electrode terminal 134 before it is spun and fitted into the rotation preventing groove 1333. After the electrode terminal 134 is spun and fitted into the rotation preventing groove 1333, the end of the electrode terminal 134 may have substantially the same area as that of the rotation preventing groove 1333.

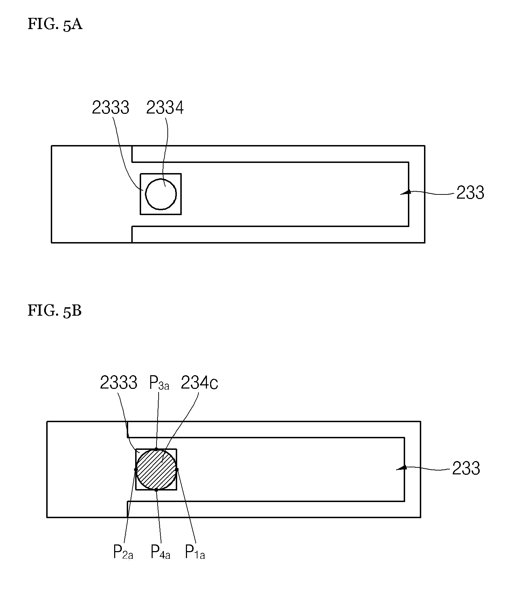

The rotation preventing groove 1333 is formed to have a horizontal sectional shape that is substantially circular or polygonal. Here, the sectional shape of the rotation preventing groove 1333 may correspond to a cross-sectional shape of the terminal plate 133, which is parallel to the bottom surface of the terminal plate 133. That is to say, the rotation preventing groove 1333 may have a substantially circular section, as shown in FIGS. 3A, 4B and 8. Alternatively, as shown in FIGS. 5A, 6A and 7A, the rotation preventing groove 1333 may have a substantially polygonal shape having at least three sides. Here, as shown in FIGS. 5B, 6B and 7B, the rotation preventing groove 1333 may make contact with the end of the electrode terminal 134 at one or more points. Therefore, according to at least one embodiment, an inner sidewall of the rotation preventing groove 1333 and an outer circumferential surface of the end of the electrode terminal 134 make contact with each other at the one or more points, thereby improving the fixing force between the electrode terminal 134 and the terminal plate 133 by increasing the contact area therebetween. The terminal plate 133 can be prevented from rotating due to the fixing force. When the rotation preventing groove 1333 has a substantially polygonal shape, it can be formed to have varying distances between a central region of the second terminal hole 1334 and the inner walls or sidewalls of the second terminal hole 1334.

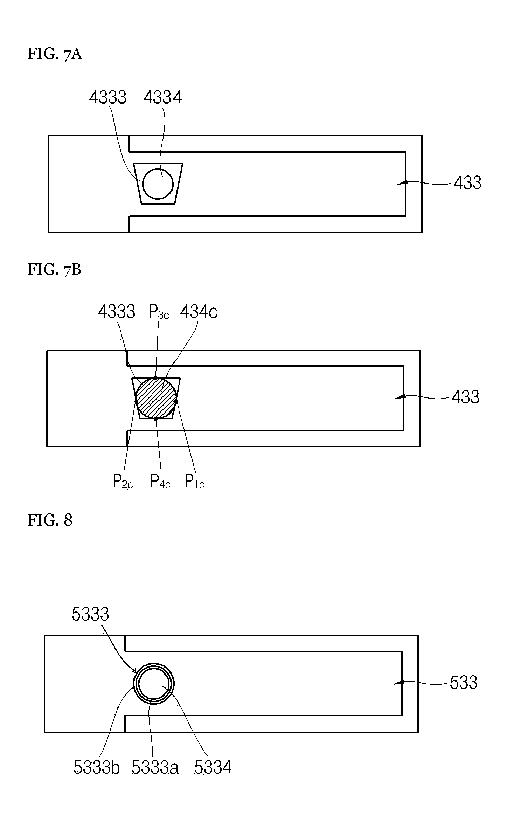

As shown in FIG. 3B, the rotation preventing groove 1333 is formed such that the bottom surface of the rotation preventing groove 1333 and the bottom surface of the terminal plate 133 are stepped. Thus, the rotation preventing groove 1333 is formed to be stepped with respect to the bottom surface of the terminal plate 133, thereby providing a space to be filled with a portion of the end of the electrode terminal 134. Therefore, the rotation preventing groove 1333 fixes the terminal plate 133 by filling the stepped portion with the portion of the end of the electrode terminal 134. Thus, the terminal plate 133 is prevented from rotating. As shown in FIG. 8, the rotation preventing groove 1333 has at least one stepped portion between the bottom surface of the rotation preventing groove 1333 and the bottom surface of the terminal plate 133, thereby easily fixing the terminal plate 133 to the end of the electrode terminal 134.

According to some embodiments, the depth of the rotation preventing groove 1333 is about 35% to about 55% of the thickness of the terminal plate 133. If the depth of the rotation preventing groove 1333 is less than about 35% of the thickness of the terminal plate 133, the fixing force between the terminal plate 133 and the rotation preventing groove 1333 may be relatively weak. However, when the depth of the rotation preventing groove 1333 is greater than about 55% of the thickness of the terminal plate 133, the electrode terminal 134 may be pressed so that the bottom surface of the rotation preventing groove 1333 is damaged and the insulation plate 132 making contact with the top surface of the terminal plate 133 is also damaged during rotation (that is, riveting). However, depending on the embodiment, the depth of the rotation preventing groove 1333 may be less than about 35% or greater than about 55% of the thickness of the terminal plate 133.

The electrode terminal 134 is inserted into the first terminal hole 131a, the through hole 132b and the second terminal hole 1334 respectively formed in the cap plate 131, the insulation plate 132 and the terminal plate 133 and is electrically connected to the negative electrode tab 115 of the electrode assembly 110 through the terminal plate 133. When the electrode terminal 134 is inserted into the first terminal hole 131a of the cap plate 131, it may be electrically insulated from the cap plate 131 via the gasket 135. Meanwhile, the positive electrode tab 114 may be connected to the cap plate 121 using the method for forming the electrode assembly 110.

The electrode terminal 134 can be formed as a negative electrode terminal. However, in other embodiments, the electrode terminal 134 is formed as a positive electrode terminal according to the configuration of the secondary battery.

The electrode terminal 134 may include a head part 134a fixed to a top portion of the cap plate 131 via the tubular gasket 135, a body part 134b extending from the head part 134a toward the terminal plate 133, and a mounting part or tail 134c extending from the body part 134b and mounted in the rotation preventing groove 1333. An inner diameter of the mounting part 134c may be larger than an outer diameter of the body part 134b. That is to say, the mounting part 134c is formed on the end of the body part 134b to spread out to the periphery of the rotation preventing groove 1333 when the end of the body part 134b is fitted into the rotation preventing groove 1333. The sectional shape of the mounting part 134c may be different from that of the head part 134a.

The insulation case 140 is arranged in the case 120 between the electrode assembly 110 and the cap assembly 130. The insulation case 140 has a positive electrode tab through hole 141 and a negative electrode tab through hole 142 formed therein. The positive electrode tab 114 is connected to the cap plate 131 through the positive electrode tab through hole 141 and the negative electrode tab 115 is connected to the terminal plate 133 through the negative electrode tab through hole 142.

Hereinafter, a secondary battery according to another embodiment will be described.

FIG. 5A illustrates the bottom surface of a terminal plate fastened with an insulation plate in a secondary battery according to another embodiment and FIG. 5B illustrates the bottom surface of the terminal plate after an electrode terminal is fastened with the terminal plate shown in FIG. 5A.

Referring to FIGS. 5A and 5B, the secondary battery is different from the secondary battery shown in FIGS. 1 to 4B in the structure of the rotation preventing groove 2333 and the following description will focus on the rotation preventing groove 2333.

As shown in FIGS. 5A and 5B, in the secondary battery, the rotation preventing groove 2333 is formed to have a substantially rectangular sectional shape in a peripheral portion (that is, an edge portion) of a second terminal hole 2334 formed on the bottom surface of a terminal plate 233. Thus, the rotation preventing groove 2333 has a sectional shape having four sides on the bottom surface of the terminal plate 233. Here, the rotation preventing groove 2333 makes contact with an end 234c of an electrode terminal (that is, a mounting part) at four points P₁ₐ, P₂ₐ, P₃ₐ and P₄ₐ. Therefore, in the embodiment of FIGS. 5A and 5B, since the inner sidewall of the rotation preventing groove 2333 and the outer circumferential surface of the end 234c of the electrode terminal make contact with each other at the four points P₁ₐ, P₂ₐ, P₃ₐ and P₄ₐ, the fixing force between the end 234c of the electrode terminal and the terminal plate 233 is increased due to the increased contact area between the end 234c of the electrode terminal and the terminal plate 233. This increased fixing force can prevent the terminal plate 233 from rotating. Meanwhile, the distances between a central region of the second terminal hole 2334 and the four points P₁ₐ, P₂ₐ, P₃ₐ and P₄ₐ at which the rotation preventing groove 2333 and the end 234c of the electrode terminal make contact with each other may be different from the distance between the central region of the second terminal hole 2334 and the inner sidewall of the rotation preventing groove 2333 excluding the four points P₁ₐ, P₂ₐ, P₃ₐ and P₄ₐ.

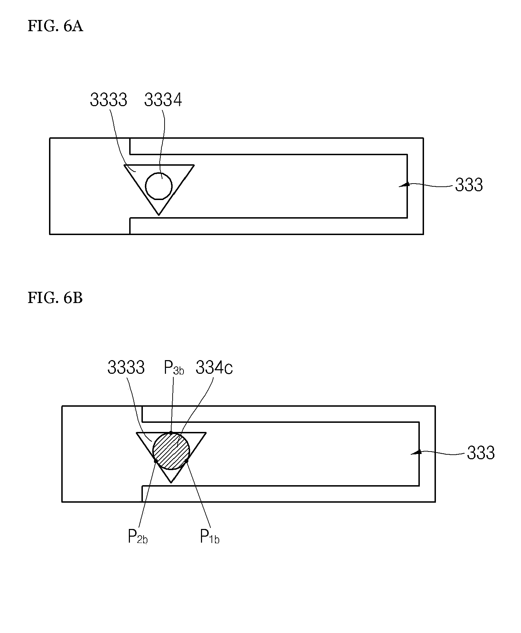

FIG. 6A illustrates the bottom surface of a terminal plate before an electrode plate is fastened with the terminal plate in a secondary battery according to still another embodiment and FIG. 6B illustrates the bottom surface of the terminal plate after the electrode terminal is fastened with the terminal plate shown in FIG. 6A.

Referring to FIGS. 6A and 6B, the secondary battery is different from the secondary battery shown in FIGS. 1 to 4B in the structure of the rotation preventing groove 3333 and the following description will focus on the rotation preventing groove 3333.

As shown in FIGS. 6A and 6B, in the secondary battery, the rotation preventing groove 3333 is formed to have a substantially triangular sectional shape in a peripheral portion (that is, an edge portion) of a second terminal hole 3334 formed on the bottom surface of a terminal plate 333. That is to say, the rotation preventing groove 3333 has a sectional shape having three sides on the bottom surface of a terminal plate 333. Here, the rotation preventing groove 3333 makes contact with an end 334c of an electrode terminal (that is, a mounting part) at three points P_{1b}, P_{2b} and P_{3b}. Therefore, in the embodiment of FIGS. 6A and 6B, since the inner sidewall of the rotation preventing groove 3333 and the outer circumferential surface of the end 334c of the electrode terminal make contact with each other at the three points P_{1b}, P_{2b} and P_{3b}, the fixing force between the end 334c of the electrode terminal and the terminal plate 333 is increased due to the increased contact area between the end 334c of the electrode terminal and the terminal plate 333. This increased fixing force can prevent the terminal plate 333 from rotating. Meanwhile, the distances between a central region of the second terminal hole 3334 and the three points P_{1b}, P_{2b} and P_{3b} at which the rotation preventing groove 3333 and the end 334c of the electrode terminal make contact with each other may be different from the distance between the central region of the second terminal hole 3334 and the inner sidewall of the rotation preventing groove 3333 excluding the three points P_{1b}, P_{2b} and P_{3b}.

FIG. 7A illustrates the bottom surface of a terminal plate before an electrode plate is fastened with the terminal plate in a secondary battery according to still another embodiment and FIG. 7B illustrates the bottom surface of the terminal plate after the electrode terminal is fastened with the terminal plate shown in FIG. 7A.

Referring to FIGS. 7A and 7B, the secondary battery is different from the secondary battery shown in FIGS. 1 to 4B in the structure of the rotation preventing groove 4333 and the following description will focus on the rotation preventing groove 4333.

As shown in FIGS. 7A and 7B, in the secondary battery, the rotation preventing groove 4333 is formed to have a substantially trapezoidal sectional shape in a peripheral portion (that is, an edge portion) of a second terminal hole 4334 formed on the bottom surface of a terminal plate 333. Thus, the rotation preventing groove 4333 has a sectional shape having four sides on the bottom surface of the terminal plate 433. Here, the rotation preventing groove 4333 makes contact with an end 434c of an electrode terminal (that is, a mounting part) at two points P_{3c} and P_{4c} or four points P_{1c}, P_{2c}, P_{3c} and P_{4c}. Therefore, in the embodiment of FIGS. 7A and 7B, since the inner sidewall of the rotation preventing groove 4333 and the outer circumferential surface of the end 434c of the electrode terminal make contact with each other at the two points P_{3c} and P_{4c} or the four points P_{1c}, P_{2c}, P_{3c} and P_{4c}, the fixing force between the end 434c of the electrode terminal and the terminal plate 433 is increased due to the increased contact area between the end 434c of the electrode terminal and the terminal plate 433. This increased fixing force can prevent the terminal plate 433 from rotating. Meanwhile, the distances between a central region of the second terminal hole 4334 and the two points P_{3c} and P_{4c} or the four points P_{1c}, P_{2c}, P_{3c} and P_{4c}, at which the rotation preventing groove 4333 and the end 434c of the electrode terminal make contact with each other may be different from the distance between the central region of the second terminal hole 3334 and the inner sidewall of the rotation preventing groove 4333 excluding the two points P_{3c} and P_{4c} or the four points P_{1c}, P_{2c}, P_{3c} and P_{4c}.

FIG. 8 illustrates the bottom surface of a terminal plate before an electrode plate is fastened with the terminal plate in a secondary battery according to still another embodiment.

Referring to FIG. 8, the secondary battery is different from the secondary battery shown in FIGS. 1 to 4B in the structure of the rotation preventing groove 5333 and the following description will focus on the rotation preventing groove 5333.

As shown in FIG. 8, the rotation preventing groove 5333 has at least one stepped portion between a bottom surface of the rotation preventing groove 5333 and a bottom surface of a terminal plate 533. Specifically, the rotation preventing groove 5333 includes a first stepped portion 5333a formed at a central region of a second terminal hole 5334 and a second stepped portion 5333b formed surrounding the first stepped portion 5333a. The number of the stepped portions of the rotation preventing groove 5333 may be adjusted according to the design requirements. Therefore, in the FIG. 8 embodiment, at least one stepped portion is formed between the bottom surface of the rotation preventing groove 5333 and the bottom surface of the terminal plate 533, thereby easily fixing the terminal plate 533 to an end of an electrode terminal.

Although secondary batteries according to exemplary embodiments of the inventive technology have been described in detail herein, it should be understood that many variations and modifications of the described inventive technology, which may be apparent to those skilled in the art, will still fall within the scope of the present invention as defined by the appended claims.

## Claims

1. A cap assembly (130) for a secondary battery, the cap assembly comprising:
a cap plate (131) having a first terminal hole (131a);
a terminal plate (133) placed below the cap plate and having a second terminal hole (1334), wherein the terminal plate includes a lower surface facing away from the cap plate; and
an electrode terminal (134) inserted into the first and second terminal holes;
wherein a rotation preventing groove (1333) is formed in the lower surface of the terminal plate around the second terminal hole, and
wherein the rotation preventing groove is arranged to contact an end of the electrode terminal.

2. The cap assembly of claim 1, wherein the rotation preventing groove includes a bottom surface forming a step with the lower surface of the terminal plate.

3. The cap assembly of claim 2, wherein at least one additional step is formed between the bottom surface of the rotation preventing groove and the lower surface of the terminal plate.

4. The cap assembly of any one of the preceding claims, wherein the rotation preventing groove has a circular or polygonal cross-sectional shape.

5. The cap assembly of claim 4, wherein the diameter of the electrode terminal is the same as the minimum distance between the edges of the rotation prevention groove.

6. The secondary battery of claim 5 or 6, wherein the area of the rotation preventing groove is greater than or equal to the area of the end of the electrode terminal.

7. The cap assembly of any one of the preceding claims, wherein the electrode terminal includes:
a head fixed to the cap plate via an electrically insulating gasket;
a body extending from the head toward the terminal plate; and
a tail extending from the body and secured in the rotation preventing groove.

8. The cap assembly of claim 7, wherein the diameter of the tail is greater than the diameter of the body.

9. The cap assembly of claim 7 or 8, wherein the head and the tail have different cross-sectional shapes.

10. The cap assembly of any one of claims 7 to 9, wherein the diameters of the first and second terminal holes are greater than or equal to the diameter of the body.

11. The cap assembly of any one of the preceding claims, wherein the cap assembly further includes an insulation plate interposed between the cap plate and the terminal plate and wherein the insulation plate has a through hole through which the electrode terminal passes.

12. The cap assembly of any one of the preceding claims, wherein the depth of the rotation preventing groove is between 35% and 55% of the thickness of the terminal plate.

13. The cap assembly of any one of the preceding claims, wherein the rotation prevention groove includes a sidewall and wherein the electrode terminal contacts the rotation prevention groove via the sidewall.

14. The cap assembly of any one of the preceding claims, wherein the electrode terminal protrudes from the lower surface of the terminal plate.

15. A secondary battery, comprising:
an electrode assembly including a first electrode plate, a second electrode plate and a separator;
a case having an opening and housing the electrode assembly and an electrolytic solution; and
the cap assembly according to any one of the preceding claims, arranged to seal the opening of the case.
